# EUROPÄISCHE PATENTSCHRIFT

(11) **EP 0 684 403 B1**
(45) Veröffentlichungstag und Bekanntmachung des Hinweises auf die Patenterteilung: **13.09.2000**
(21) Anmeldenummer: 95106743.8
(22) Anmeldetag: 04.05.1995
(51) Int. Cl.: F16D 65/16

(54) **Scheibenbremse**
Disc brake
Frein à disque

(30) Priorität: 06.05.1994 DE 4416175
(43) Veröffentlichungstag der Anmeldung: 29.11.1995
(73) Patentinhaber: PERROT BREMSEN GmbH, 68229 Mannheim (DE)
(72) Erfinder: Antony, Paul, D-67550 Worms (DE); Bender, Rolf, D-69181 Leimen (DE); Falter, Wolfgang, D-69118 Heidelberg (DE)
(74) Vertreter: Patentanwälte Leinweber & Zimmermann

(56) Entgegenhaltungen:
- EP-A- 0 589 206
- WO-A-93/22579
- DE-A- 4 021 572

## Beschreibung

Die Erfindung betrifft eine Scheibenbremse mit einem Druckstück, des im wesentlichen senkrecht zur Bremsscheibenebene verschieblich gehalten ist, wobei zur Verschiebung eine parallel zur Bremsscheibe angeordnete Zuspannwelle dient, und mit einer eine Anzahl Teillager umfassenden Lagerung für das Druckstück, wobei die Teillager jeweils ein Lagerspiel haben.

Eine derartige Scheibenbremse ist beispielsweise aus der DE 42 31 560 A1 und aus der noch nicht veröffentlichten DE-P 4 307 019 bekannt.

Das Druckstück dient dabei dazu, die von einer Vorspanneinrichtung herrührende Kraft auf die gegen die Bremsscheibe drückenden Bremsbacken zu übertragen. Dabei können - wie im Falle der DE 42 31 560 A1 - am Druckstück zwei Druckspindeln zur Kraftübertragung vorgesehen sein. Darüber hinaus ist die Erfindung aber beispielsweise auch auf eine Version mit nur einer oder mit mehr als zwei Druckspindel(n) anwendbar.

Nach dem genannten Stand der Technik ist das speziell ausgebildete, annähernd rechteckige Druckstück, welches sich parallel zur Bremsscheibenebene erstreckt und zur Aufnahme von einer oder mehreren Druckspindeln dient, an beiden Seitenflächen gewölbt ausgestaltet und in komplementär dazu ausgebildeten Flächen des Bremssattels axial verschiebbar geführt und abgestützt. Diese mithin kalottenähnlichen Lagerung verfügt über ein Mindestlagerspiel, damit durch die Zuspannung verursachte Verformungen nicht zu Verklemmungen führen.

Die Kalottenlagerung dient zur Aufnahme sowohl radialer und als auch tangentialer Bremsumfangskräfte, die von der bzw. den Druckspindel(n) auf das Druckstück übertragen werden.

Die Ausgestaltung der Lagerflächen am Druckstück einerseits und die Ausgestaltung der Lagerflächen am Bremssattel andererseits können wesentlich dazu beitragen, die Gleitreibung während einer Verschiebung des Druckstücks zu minimieren und somit den Wirkungsgrad der Bremse zu verbessern. Wie gesagt kommt es dabei ganz entschieden darauf an, daß es während des Bremszupann- und Bremslösevorgangs zu keinerlei Verklemmungen zwischen den Verschiebeteilen (Druckstück/Bremssattel) kommt.

Aus der DE 40 21 572 A1 ist eine Scheibenbremse mit einem im wesentlichen senkrecht zur Bremsscheibenebene verschieblichen Druckstück bekannt. Zur Verschiebung des Druckstücks dient eine Zuspannwelle, die senkrecht zur Bremsscheibenebene angeordnet und in Richtung der Bremsscheibenachse gesehen in das Druckstück eingeschraubt ist. Zur Lagerung des Druckstücks dienen mehrere spiellose Lager.

Aufgabe der Erfindung ist es, eine Scheibenbremse der eingangs genannten Art derart weiterzubilden, daß die Lagerbelastung infolge von auf das Druckstück einwirkenden Bremsumfangskräften minimiert wird, wobei weiterhin ein Verklemmen ausgeschlossen sein soll.

Erfindungsgemäß wird die gestellte Aufgabe dadurch gelöst, daß sich mindestens zwei Teillager dadurch voneinander unterscheiden, daß sie voneinander unterschiedliche Komponenten auf das Druckstück wirkender Kräfte aufnehmen.

Der Erfindung liegt die Erkenntnis zugrunde, daß die Belastung beziehungsweise Beanspruchung der einzelnen Teillager durch komponentenweise Aufteilung der darauf wirkenden Kräfte auf unterschiedliche Teillager erheblich vermindert werden kann. Ein Verklemmen ist dabei zuverlässig ausgeschlossen. Darüber hinaus bewirkt die erwähnte Aufteilung eine Verbesserung der Gleitfähigkeit des Druckstücks gegenüber dem Bremssattel. Schließlich wird die Wirksamkeit des Zuspannhubes insbesondere dann durch die erfindungsgemäße Aufteilung der Kräfte erhöht, wenn die Druckstückverschiebung mittels einer Zuspannwelle erfolgt, bei der der Nocken beispielsweise eine zykloidenartige Kontur entsprechend der DE-P 4 307 019 hat.

Nach einer bevorzugten Ausführungsform der Erfindung stehen die auf die einzelnen Teillager verteilten Komponenten senkrecht aufeinander. Dadurch wird die Gefahr des Verklemmens weiter verringert.

Erfindungsgemäß können die Teillager voneinander unterschiedliche Abstände von der Bremsscheibe haben. Mit anderen Worten kann erfindungsgemäß vorgesehen sein, daß die von den Teillagern aufzunehmenden Kraftkomponenten an in Richtung normal zur Bremsscheibe gesehen unterschiedlichen Orten aufgenommen werden, wodurch eine noch weiter gehende Verteilung erreicht wird.

Mindestens ein Teillager kann Leisten beinhalten. Durch solche Leisten wird die Lagerfläche verringert. Das führt zu einer entsprechenden Verringerung der für das Lager zu bearbeitenden Fläche und damit zu Arbeitsersparnis. Ferner ergibt sich eine Gewichtsersparnis, weil zwischen und neben den Leisten entsprechende Ausnehmungen vorgesehen sein können.

Beim Zuspannen der Bremse erfolgt eine Aufweitung beispielsweise eines das Druckstück umschließenden Sattels auf der bezüglich der Bremsscheibe radial inneren und äußeren Seite des Druckstücks, wohingegen an den anderen Seiten eine Einschnürung zu beobachten ist. Im Hinblick auf die Gefahr des Verklemmens ist es daher erfindungsgemäß bevorzugt, die Leisten auf der radial inneren und/oder der radial äußeren Seite des Druckstücks anzuordnen.

Um Kräfte jeder Richtung aufnehmen zu können, sind die Leisten bevorzugt bezüglich der Mittelebene des Druckstücks angestellt.

Ferner kann erfindungsgemäß vorgesehen sein, daß mindestens ein Teillager einen Zapfen beinhaltet, der in eine Ausnehmung hineinragt, wobei ein Spiel zwischen dem Zapfen und der Innenwand der Ausnehmung größer als das Lagerspiel mindestens eines anderen Teillagers ist. Dadurch wird erreicht, daß der Zapfen mit der Innenwand der Ausnehmung Kräfte nur in derjenigen Richtung aufnimmt, in der sie nicht von dem genannten anderen Teillager aufgenommen werden. Diese Ausgestaltung verringert die Gefahr des Verklemmens weiter.

Das Druckstück kann einstückig mit seinen Lagerelementen ausgeführt sein. Es kann aber auch aus zwei oder mehr Einzelelementen bestehen. So kann beispielsweise der Zapfen gegenüber dem übrigen Druckstück drehbar gehalten sein.

Nach einer Ausführung der Erfindung ist eine Vorspanneinrichtung zum Vorspannen des Druckstücks nach radial außen bezüglich der Bremsscheibe vorgesehen. Dadurch wird das Druckstück bei einer Axialverschiebung relativ von der inneren Führung abgehoben, wodurch die Wirksamkeit des Zuspannhubes erhöht und die Gleitreibung zwischen den Verschiebeteilen nochmals verringert wird.

An den Teillagern können Gleitbuchsen und/oder Gleitsteine vorgesehen sein, die gegebenenfalls austauschbar sein können.

Schließlich können reibungsmindernde Materialien auf Lagerflächen der Teillager aufgetragen sein. Diese Maßnahmen dienen weiter dem Verringern des Widerstands bei der Zuspannung sowie bei der Entlastung der Bremse.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: einen quer zur Bremsscheibenebene liegenden Schnitt durch ein Ausführungsbeispiel einer Scheibenbremse nach der Erfindung,
- Fig. 2: einen Schnitt quer zu dem Schnitt nach Fig. 1,
- Fig. 3: eine Draufsicht auf das Druckstück nach den Fig. 1 und 2 und
- Fig. 4: eine Draufsicht auf eine alternative Ausführungsform des Druckstücks.

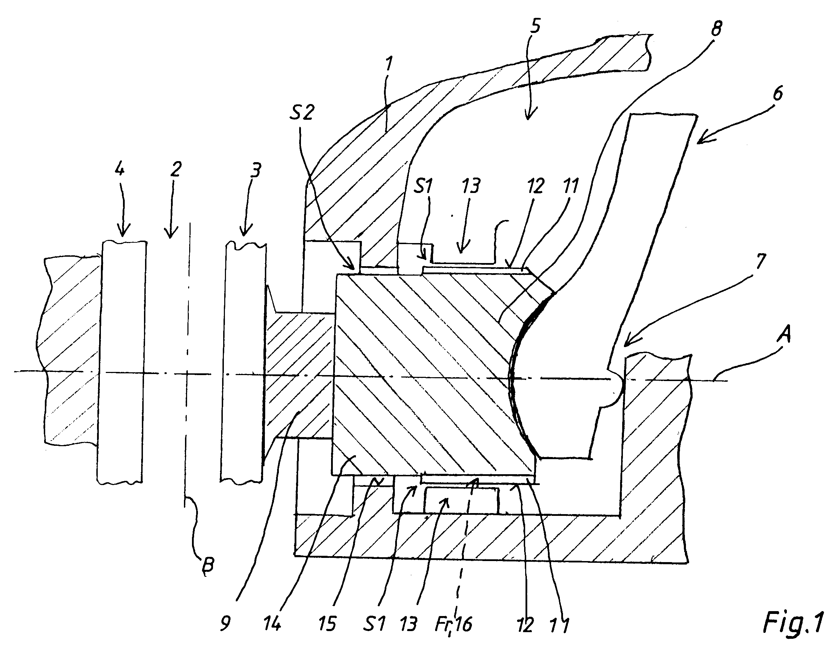

Bei der Scheibenbremse nach Fig. 1 handelt es sich um eine Gleitsattelscheibenbremse. Sie weist einen Bremssattel 1 auf, der in üblicher Weise mit seinen beiden Schenkeln eine Bremsscheibe 2 übergreift und dessen Schenkel dazu dienen, beidseitig der Bremsscheibe 2 angeordnete Bremsbacken 3, 4 gegen die Bremsscheibe 2 zu drücken. In nicht näher dargestellter Weise ist der Bremssattel 1 quer zur Bremsscheibe 2 verschiebbar. Der Bremssattel 1 weist einseitig eine Zuspannvorrichtung 5 zur Betätigung der Bremse auf.

Die Zuspannvorrichtung 5 besteht im wesentlichen aus einem Bremshebel 6, der mit einer parallel zur Bremsscheibenebene B angeordneten Zuspannwelle 7 verbunden ist, und einem im Bremssattel 1 verschieblichen Druckstück 8, das sich innerhalb des Bremssattels 1 parallel zur Bremsscheibe annähernd über die Bremsbackenbreite erstreckt.

Kontur und Lagerung der Zuspannwelle 7 müssen nicht die in Fig. 1 gezeigte Form haben. Vielmehr kann die Zuspannung auch entsprechend der DE 42 31 560 A1 gestaltet sein. Selbstverständlich ist auch jede andere Form der Zuspannung mit parallel zur Bremsscheibenebene angeordneter Zuspannwelle denkbar.

Bei der Einspindelausführung ist in das Druckstück 8 mittig eine Druckspindel 9 eingeschraubt. Hingegen sind bei einer Zweispindelausführung zwei Druckspindeln am jeweils äußeren Ende des Druckstücks 8 eingeschraubt. Jede Druckspindel 9 selbst steht in Wirkverbindung mit der verschiebbaren Bremsbacke 3.

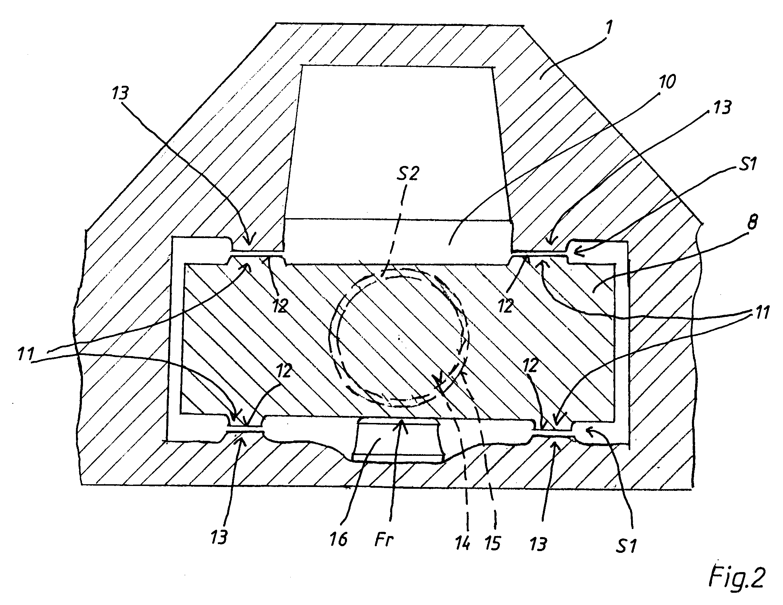

Fig. 2 zeigt einen Schnitt parallel zur Bremscheibenebene der Bremse, insbesondere eine Querschnittsöffnung 10 des Bremssattels 1, in der das verschiebliche Druckstück 8 angeordnet ist.

Dabei weist das Druckstück 8 radial außen und radial innen bezüglich der Bremsscheibe 2 mindestens auf jeder Seite zwei Führungsleisten 11 auf, die sich axial annähernd über die Länge des Druckstücks 8 erstrecken. Die äußeren Gleitflächen 12 der Führungsleisten 11 verlaufen hierbei parallel zur gedachten Mittelebene A des Druckstücks 8. Ebenso sind Führungsleisten 13 des Bremssattels 1 ausgebildet.

Natürlich können die radial inneren und äußeren Führungsleisten teilweise in Kombinationen am Druckstück und/oder Bremssattel ausgebildet sein, wenn dadurch eine Lagerverbesserung erzielt wird.

Zwischen den Führungsleisten 11 und 13 ist ein radiales Lagerspiel S1 vorhanden.

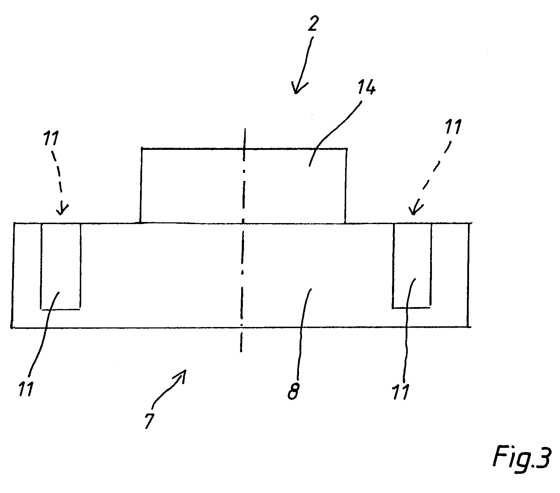

Bei der Ausführungsform nach den Fig. 1 bis 3 dient der seitlichen Führung und Abstützung des Druckstücks 8 gegenüber dem Bremssattel 1 sowie der Aufnahme von tangentialen Bremsumfangskräften ein in Richtung auf die Bremsscheibe 2 weisender, zylinderförmig ausgebildeter Zapfenansatz 14 am Druckstück 8, der in eine Öffnung 15 beziehungsweise Ausnehmung des Bremssattels 1 mit einem weiteren Lagerspiel S2 eingreift. Einzelheiten sind der Fig. 2 und weiterhin der Draufsicht auf das schematisch dargestellte Druckstück 8 der Fig. 3 zu entnehmen. Das Lagerspiel S2 ist größer als das Lagerspiel S1.

Alternativ zu dem mit dem restlichen Druckstück 8 einstückig ausgebildeten Zapfenansatz 14 kann auch ein separater Zapfen vorgesehen sein, der gegenüber dem übrigen Druckstück 8 drehbar gehalten ist.

Zwischen den radial inneren Führungsleisten 11 des Druckstücks 8 und dem Führungsabschnitt des Bremssattels 1 ist eine Feder 16 mit einer Kraftkomponente Fr angeordnet, die vorzugsweise eine Blattfeder ist und entweder am Druckstück 8 oder am Bremssattel 1 gehalten wird.

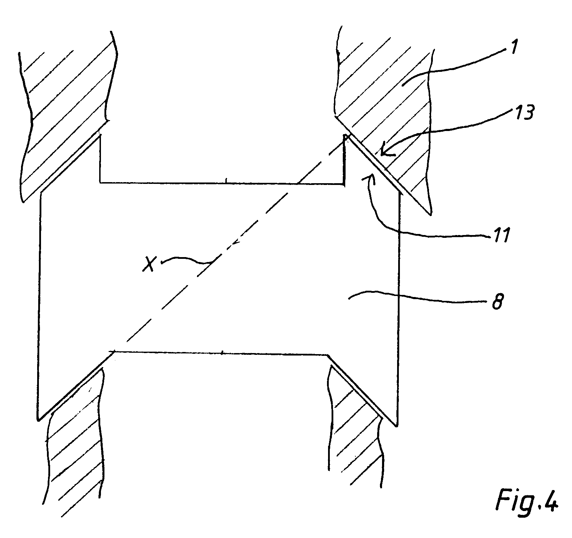

Eine abgewandelte Ausbildung der Führungsleisten 11, 13 zeigt beispielhaft die Fig. 4, nach der die Radialflächen nicht parallel zur gedachten Druckstückmittelebene A verlaufen. Dementsprechend sind die Gegenflächen des Bremssattels 1 auch unter einem entsprechenden Winkel angestellt. Diagonal einander gegenüberliegende Flächen stehen so zueinander, daß die von der einen Fläche verlaufende Normale X mit der anderen Fläche fluchtet. Diese Ausgestaltung wirkt einem Verklemmen weitestgehend entgegen.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein. Insbesondere kann die Erfindung auch bei Festsattelscheibenbremsen mit beidseitiger Zuspannung Anwendung finden.

### Bezugszeichenliste

- 1: Bremssattel
- 2: Bremsscheibe
- 3: Bremsbacke
- 4: Bremsbacke
- 5: Zuspannvorrichtung
- 6: Bremshebel
- 7: Zuspannwelle
- 8: Druckstück
- 9: Druckspindel
- 10: Querschnittsöffnung
- 11: Führungsleiste
- 12: Gleitfläche
- 13: Führungsleiste
- 14: Zapfen
- 15: Ausnehmung
- A: Druckstückmittelebene
- B: Bremsscheibenebene
- X: Normale

## Patentansprüche

1. Scheibenbremse mit einem Druckstück (8), das im wesentlichen senkrecht zur Bremsscheibenebene (B) verschieblich gehalten ist, wobei zur Verschiebung eine parallel zur Bremsscheibenebene angeordnete Zuspannwelle (7) dient, und mit einer eine Anzahl Teillager (11, 13; 14, 15) umfassenden Lagerung für das Druckstück (8), wobei die Teillager (11, 13; 14, 15) jeweils ein Lagerspiel (S1, S2) haben,
dadurch gekennzeichnet, daß
sich mindestens zwei Teillager (11, 13; 14, 15) dadurch voneinander unterscheiden, daß sie voneinander unterschiedliche Komponenten auf das Druckstück (8) wirkender Kräfte aufnehmen.

2. Scheibenbremse nach Anspruch 1, dadurch gekennzeichnet, daß die Komponenten senkrecht aufeinander stehen.

3. Scheibenbremse nach Anspruch 1 oder 2, dadurch gekennzeichnet, daß die Teillager (11, 13; 14, 15) voneinander unterschiedliche Abstände von der Bremsscheibe (2) haben.

4. Scheibenbremse nach einem der vorangehenden Ansprüche, dadurch gekennzeichnet, daß mindestens ein Teillager (11, 13) Leisten beinhaltet.

5. Scheibenbremse nach Anspruch 4, dadurch gekennzeichnet, daß die Leisten (11, 13) auf der radial inneren und/oder der radial äußeren Seite des Druckstücks (8) liegen.

6. Scheibenbremse nach Anspruch 4 oder 5, dadurch gekennzeichnet, daß die Leisten (11, 13) bezüglich der Mittelebene (A) des Druckstücks (8) angestellt sind.

7. Scheibenbremse nach einem der vorangehenden Ansprüche, dadurch gekennzeichnet, daß mindestens ein Teillager (14, 15) einen Zapfen (14) beinhaltet, der in eine Ausnehmung (15) hineinragt, wobei ein Spiel (S2) zwischen dem Zapfen (14) und der Innenwand der Ausnehmung (15) größer als das Lagerspiel (S1) mindestens eines anderen Teillagers (11, 13) ist.

8. Scheibenbremse nach einem der vorangehenden Ansprüche, dadurch gekennzeichnet, daß das Druckstück (8, 11, 14) aus zwei oder mehr Einzelelementen besteht.

9. Scheibenbremse nach einem der vorangehenden Ansprüche, gekennzeichnet durch eine Vorspanneinrichtung (16) zum Vorspannen des Druckstücks (8) nach radial außen bezüglich der Bremsscheibe (2).

10. Scheibenbremse nach einem der vorangehenden Ansprüche, gekennzeichnet durch Gleitbuchsen und/oder Gleitsteine an den Teillagern (11, 13; 14, 15).

11. Scheibenbremse nach Anspruch 10, dadurch gekennzeichnet, daß die Gleitbuchsen und/oder Gleitsteine austauschbar sind.

12. Scheibenbremse nach einem der vorangehenden Ansprüche, gekennzeichnet durch auf Lagerflächen (12) der Teillager (11, 13; 14, 15) aufgetragene reibungsmindernde Materialien.

## Claims

1. Disc Brake with a thrust piece (8) which moves vertically to the centreline of the brake disc (B) via a parallel to the brake disc installed clamping shaft (7), and a number of sectional bearings (11, 13, 14, 15) surrounding the thrust piece (8), whereby each sectional bearing (11, 13, 14, 15) is configured to provide a bearing clearance (S1, S2),
characterised by
a minimum of two or the sectional bearings (11, 13, 14, 15) differing from each other in that they can accept varying amounts of torque excerted upon the thrust piece (8).

2. Disc Brake according to claim 1, characterised by the components being arranged vertically on top of one another.

3. Disc Brake according to claim 1 or 2, characterised by the sectional bearings (11, 13, 14, 15) being located in varying positions from the brake disc (2).

4. Disc Brake according to one of the above listed claims, characterised by the fact that ridges are incorporated into a minimum of one sectional bearing (11, 13).

5. Disc Brake according to claim 4, characterised by the ridges (11, 13) being arranged radially on the inside and/or outside of the thrust piece (8).

6. Disc Brake according to claim 4 or 5, characterised by the ridges (11, 13) are placed in line with the centreline (A) of the thrust piece (8).

7. Disc Brake according to one of the aforementioned claims, characterised by a minimum of one of the sectional bearings (14, 15) incorporating a pin (14) which reaches into an opening (15) whereby the gap (S2) between the pin (14) and the inside wall of the opening (15) is greater than the bearing clearance (S1) of a minimum of one of the other sectional bearings (11, 13)

8. Disc Brake according to one of the above claims, characterised by the thrust piece (8, 11, 14) consisting of 2 or more individual elements.

9. Disc Brake according to one of the above claims, characterised by a clamping unit (16) which forces the thrust piece (8) radially outward relative to the brake disc (2).

10. Disc Brake according to one of the above claims, characterised by floating bushings on the sectional bearings (11, 13, 14, 15).

11. Disc Brake according to claim 10, characterised by floating bushings which are interchangeable.

12. Disc Brake according to one of the above claims, characterised by the contact surfaces (12) of the sectional bearing (11, 13, 14, 15) being coated with friction reducing materials.

## Revendications

1. Frein à disque avec une pièce de poussée (8) qui est guidée essentiellement en coulissement perpendiculaire au plan (B) du disque de frein, un arbre de commande (7) disposé parallèlement au plan du disque de frein servant au coulissement, et avec un palier pour la pièce de poussée (8) constitué d'un nombre de paliers partiels (11, 13; 14, 15), ceux-ci ayant chacun un jeu (S1, S2),
caractérisé en ce que
au moins deux paliers partiels (11, 13; 14, 15) se distinguent l'un de l'autre par le fait qu'ils supportent l'un et l'autre des composantes différentes d'efforts agissant sur la pièce de poussée (8).

2. Frein à disque selon la revendication 1, caractérisé en ce que les composantes sont perpendiculaires les unes aux autres.

3. Frein à disque suivant l'une des revendications 1 ou 2, caractérisé en ce que les paliers partiels (11, 13; 14, 15) se trouvent chacun à des distances différentes du disque de frein (2).

4. Frein à disque selon l'une quelconque des revendications précédentes, caractérisé en ce que au moins l'un des paliers partiels (11, 13) contient des bandes.

5. Frein à disque selon la revendication 4, caractérisé en ce que les bandes (11, 13) sont disposées sur la face radiale intérieure et/ou la face radiale extérieure de la pièce de poussée (8).

6. Frein à disque selon l'une des revendications 4 ou 5, caractérisé en ce que les bandes (11, 13) sont inclinées par rapport au plan médian (A) de la pièce de poussée (8).

7. Frein à disque selon l'une quelconque des revendications précédentes, caractérisé en ce que au moins l'un des paliers partiels (14, 15) contient un pion (14) qui vient passer à travers un évidement (15), le jeu (S2) entre le pion (14) et la paroi intérieure de l'évidement (15) étant plus grand que le jeu (S1) d'au moins un autre palier partiel (11, 13).

8. Frein à disque selon l'une quelconque des revendications précédentes, caractérisé en ce que la pièce de poussée (8, 11, 14) est constituée de deux éléments ou plus.

9. Frein à disque selon l'une quelconque des revendications précédentes, caractérisé par. un dispositif (16) pour précontraindre la pièce de poussée (8) radialement vers l'extérieur par rapport au disque de frein (2).

10. Frein à disque selon l'une quelconque des revendications précédentes, caractérisé par des bagues de glissement et/ou des coulisseaux sur les paliers partiels (11, 13; 14, 15).

11. Frein à disque selon la revendication 10, caractérisé en ce que les bagues de glissement et/ou les coulisseaux peuvent être remplacés.

12. Frein à disque selon l'une quelconque des revendications précédentes, caractérisé par des matériaux pour réduire le frottement qui sont appliqués sur les surfaces (12) des paliers partiels (11, 13; 14; 15).
